# EUROPEAN PATENT SPECIFICATION

(11) **EP 3 727 819 B1**
(45) Date of publication and mention of the grant of the patent: **16.03.2022**
(21) Application number: 18834051.7
(22) Date of filing: 20.12.2018
(51) Int. Cl.: B29D 30/04, B29C 44/18, B29C 44/34, B29C 44/50, B29C 69/00, B29L 30/00

(54) **PROCESS AND APPARATUS FOR MANUFACTURING A MOUSSE FOR VEHICLE WHEELS**
VERFAHREN UND VORRICHTUNG ZUR HERSTELLUNG EINES SCHAUMS FÜR FAHRZEUGRÄDER
PROCÉDÉ ET APPAREIL DE FABRICATION D'UNE MOUSSE POUR ROUES DE VÉHICULES

(30) Priority: 21.12.2017 IT 201700147724
(43) Date of publication of application: 28.10.2020
(73) Proprietor: Pirelli Tyre S.p.A., 20126 Milano (IT)
(72) Inventor: MONTEROSSO, Antonio, 2016 Milano (IT); SCHIAVOLIN, Andrea, 20861 Brugherio (MB) (IT); DI BIASE, Matteo, 2016 Milano (IT)
(74) Representative: Porta & Consulenti Associati S.p.A.
(86) International application number: PCT/IB2018/060416
(87) International publication number: WO 2019/123361

(56) References cited:
- EP-A1- 0 594 072
- WO-A1-90/12680
- DE-A1- 19 800 522
- DE-U1- 8 714 160
- GB-A- 1 216 049
- US-A- 3 632 705
- US-A1- 2005 205 181

## Description

The present invention relates to a process and an apparatus for manufacturing a mousse for vehicle wheels.

Preferably, the mousse manufactured in accordance with the present invention is used in tyres intended to be mounted on medium-high piston displacement (for example 450 cm³ or over), and/or high power (for example 70-100 HP) off-road motorcycles, in particular for "Rally Off-Road".

A mousse manufactured in accordance with the present invention can also be used in tyres for MTB bicycles or in tyres for other types of bicycles or off-road vehicles where, like for the aforementioned tyres for off-road motorcycles, they are intended to be used in extreme conditions, with highly differentiated type of terrains, like for example a sandy, rocky, compact terrain, comprising various kinds of obstacles.

In rallies, the tyres are required to have optimal performance in terms of durability, adherence, stability and traction on such differentiated terrains. Such performances are also typically to be maintained at high travel speeds and for long periods.

During rallies, punctures, which on uneven terrains can frequently occur, involve excessive time to repair and replace the tyre for the competitors. Most of the time this repair time results in the competitor to be retired from the competition.

Therefore, systems have been developed to prevent or minimize the effects of punctures and/or pressurized air replacement systems have been developed to support the tyre during operation, even when a puncture occurs.

Among the various systems developed for off-road motorcycles, there is the use of so-called "mousses". These are expanded polymers or polymeric foams inserted as at least a partial filler in the cavity between the radially inner part of the tyre and the rim of the wheel.

Mousses are manufactured according to various methods.

A particularly common manufacturing method provides for the vulcanization and expansion of an elastomeric compound in the form of a cylindrical element that is cut to size and joined at the ends so as to obtain a toroid made of expanded elastomer having a closed-cell honeycomb structure whose cells have an appropriate size. Such a toroid is inserted between rim and tyre before mounting the latter on the rim and defines the mousse.

### PRIOR ART

Mousses for tyres are described for example in the following prior art documents: JP 1998329228, JP1996197906 and DE19822819.

US 2005205181 describes a method for producing a tire wherein an elastomeric material such as rubber is extruded to form the outer tire casing. The extruded material is then shaped and spliced into a circle and cured in a mold (not shown) to form a toroidal-shaped tube having a hollow interior cavity.

US 3632705 describes a method for manufacturing a packing material of low bulk density involving the heating and extruding of a plastic material to form hollow cylindrical tubes of foamed plastic simultaneously with pulling on the extruded tubes to elongate the same. The extruded elongate tubes are cut to form individual cylinders and each of the individual cylinder is heated and gradually expanded to achieve a substantially greater expansion of the tube walls in a radial direction than in a longitudinal direction.

### SUMMARY OF THE INVENTION

Hereinafter, the expression "expanding elastomeric compound" is used to refer to a composition obtained from a plurality of ingredients including at least one elastomer and at least one expanding agent.

The term "cross section" of the extruder or of the extruder head is used to indicate a section taken on a plane substantially orthogonal to the extrusion direction.

The term "transverse dimensions" of the extruder or of the extruder head is used to indicate dimensions measured in a cross section.

The term "axial section" of the extruder or of the extruder head is used to indicate a section taken on a plane parallel to the extrusion direction. The term "thickness" of the mousse is used to indicate the difference between the outer diameter and the inner diameter of the toroid that defines the mousse.

The term "transverse dimensions" of the mousse or of the extruded piece or semi-finished product from which the mousse is obtained is used to indicate dimensions measured in a cross section.

With reference to the tyre, the term "tyre for motorcycles" is used to indicate a tyre having a high curvature ratio, in particular greater than 0.200, so as to be able to reach high camber angles during cornering of the motorcycle.

The term "elastomeric material" is used to indicate a composition comprising at least one elastomeric polymer and at least one reinforcing filler. Preferably, such a composition also comprises additives like, for example, a cross-linking agent and/or a plasticizer. Thanks to the provision of the cross-linking agent, such a material can be cross-linked through heating.

The term "equatorial plane" of the tyre is used to indicate a plane perpendicular to the rotation axis of the tyre and that divides the tyre into two symmetrically equal parts.

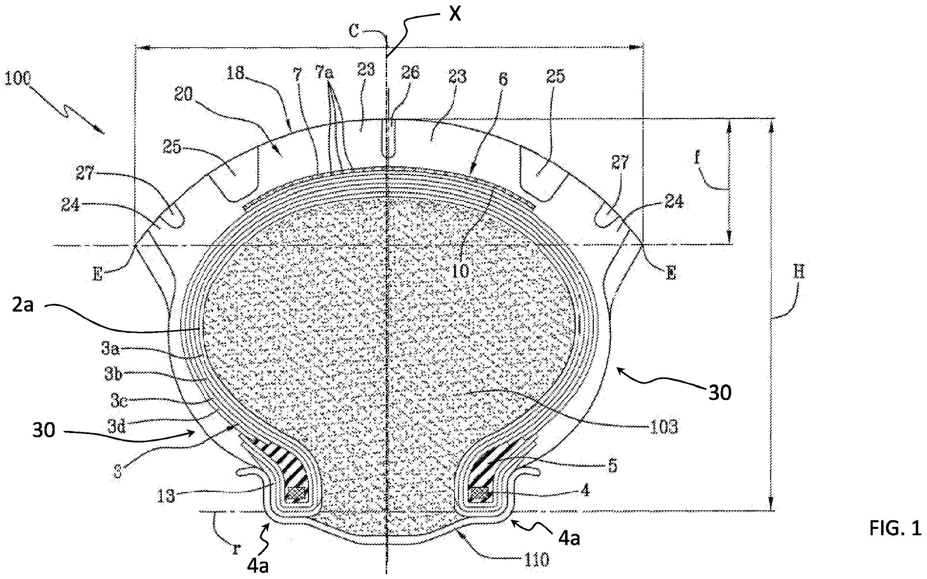

The term "curvature ratio" is used to indicate, with reference to figure 1 attached herein, the value of the transverse curvature of the tyre, defined as the value of the ratio between the distance f, measured on the equatorial plane X-X, of the top of the tread band from the line passing through the end points E of the tread band and the distance C between said end points E of the tread band. If the end points of the tread band cannot be easily identified, for example due to the lack of a precise reference like the points E in figure 1, the distance C is assumed to be the measurement of the width of maximum cross section of the tyre.

The term "camber angle" is used to indicate the angle between the equatorial plane of the tyre mounted on the wheel of the motorcycle and a plane orthogonal to the road surface.

The terms "radial" and "axial" and the expressions "radially inner/outer" and "axially inner/outer" are used with reference to a direction substantially parallel and to a direction substantially perpendicular to the equatorial plane of the tyre, respectively, i.e. to a direction substantially perpendicular and to a direction substantially parallel to the rotation axis of the tyre, respectively.

The terms "circumferential" and "circumferentially" are used with reference to the direction of the annular extension of the tyre, i.e. to the rolling direction of the tyre, which corresponds to a direction lying on a plane coinciding with or substantially parallel to the equatorial plane of the tyre.

The term "rubber-coated cord" is used to indicate an element consisting of one or more thread-like elements or filaments (hereinafter also called "wires" or "fibers") coated with, or incorporated in, a matrix of elastomeric material.

The term "radial section" or "cross section" of the tyre are used to indicate a section carried out according to a plane containing the rotation axis of the tyre.

The Applicant has observed that the mousses described in the aforementioned prior art documents are made from a solid elongated extruded piece that is subsequently bent and joined to define a ring. The Applicant has found that a joining line like the one present in the aforementioned mousses defines an area of structural discontinuity in the mouse that can cause critical conditions.

The Applicant has indeed found that at the aforementioned joining line detachment points can be generated wherein a detachment, even only partial, of the two joined end edges of the elongated extruded piece occurs. Such detachment points in practice constitute structural defects at which cracks can form and quickly propagate, which lead to the degradation, if not actually to the breaking, of the mousse, with consequent sudden degradation of the performance of the tyre and, therefore, impossibility for the driver of the motorcycle to travel for long distances at high speed and/or the need to limit the speed that it is possible to maintain, particularly during a rally.

The Applicant has thus studied how to make a mousse having a desired toroidal configuration and without the aforementioned joining line, so as not to incur in the critical conditions discussed above.

The Applicant has realized that such a mousse can be manufactured by heating in an expansion furnace a semi-finished product made of expanding elastomer and having since the beginning an annular shape. The Applicant has found that such a semi-finished product can be obtained by cutting into slices an annular elongated extruded piece made through continuous extrusion of an expanding elastomeric compound in an extruder having a suitably configured extruder head and, thereafter, vulcanizing the extruded semi-finished product in a press to provide it with the desired toroidal configuration.

The present invention therefore relates, in a first aspect thereof, to a process for manufacturing a mousse for vehicle wheels, preferably for motorcycles, according to claim 1.

The Applicant believes that in this way it is possible to manufacture a mousse that, not having any joining line, has a durability in operation greater than that of the mousses of the aforementioned prior art documents.

In a second aspect thereof, the invention relates to an apparatus for manufacturing a mousse for vehicle wheels, preferably for motorcycles, according to claim 10.

The Applicant believes that such an apparatus allows the process described above to be carried out.

The present invention can comprises, in at least one of the aforementioned aspects, at least one of the following preferred features, taken individually or in combination with any one of the other preferred features described.

Preferably, before vulcanizing the semi-finished product, said semi-finished product is cooled for a predetermined time period.

Preferably, the cooling of the semi-finished product takes place by dipping the semi-finished product in a tank containing water at room temperature. However, it is possible to provide cooling systems which are different from the one described above, like for example air cooling. Preferably, the semi-finished product is cooled for a time period comprised between about 5 minutes and about 90 minutes until a temperature no greater than about 30 °C is reached.

Preferably, after the semi-finished product has been cooled and before it is vulcanized in a press, said semi-finished product is preheated in a stove.

Preferably, the preheating in the stove comprises a heating from about 50 °C to about 150 °C in a time period that can vary from about 15 minutes to about 120 minutes.

Preferably, after the semi-finished product has been introduced in the press the latter is closed in different steps spaced by stop periods of the closing action. For example, between 1 and 5 stop steps can be provided, wherein a stop interval of the closing action, for example from 3 to 60 seconds, can be provided between two successive closing steps. Preferably, the closing force of the press is variable from about 200 KN to about 10000 KN.

Preferably, the semi-finished product is kept in the press for a time period varying between about 10 minutes and about 120 minutes at a variable temperature from about 100 °C to about 180 °C.

Preferably, after said vulcanization in a press and before said heating in an expansion furnace said semi-finished product is kept at room temperature for a predetermined time period.

Preferably, the expanding elastomeric compound is made inside said extruder upon introduction and mixing in said extruder of a plurality of ingredients selected as a function of the desired expanding elastomeric compound. Such ingredients comprise at least one elastomeric material and at least one expanding agent.

The extruder used in the present invention thus also acts as a mixer. As the compound is progressively made inside the extruder it is fed continuously to the extruder head. Therefore, there is no need to provide either a storage warehouse for the compound made or the necessary machinery to take the compound from the mixer and store it in a warehouse and to take the compound from the warehouse and feed it to the extruder.

Preferably, the vulcanized semi-finished product is kept inside the expansion furnace for a time period varying between about 5 minutes and about 100 minutes at a variable temperature between about 100 °C and about 220 °C.

Preferably, the cutting of said annular elongated extruded piece is carried out at a distance from said extruder head greater than, or equal to, about 0.5 mm.

Preferably, the cutting of said annular elongated extruded piece is carried out at a distance from said extruder head lower than, or equal to, about 5 mm.

Such a provision ensures that at the time of cutting the annular elongated extruded piece is still sufficiently hot and, projecting cantilevered from the extruder head by a segment having a reduced length, is not yet bent downwards due to its weight. This allows a clean and precise cutting of the annular elongated extruded piece to be carried out, which guarantees the quality and reproducibility of the process and, consequently, the quality of the mousse obtained through such a process.

In preferred embodiments, the cutting of said annular elongated extruded piece is carried out at a distance from said extruder head comprised between about 0.5 mm and about 5 mm, the extreme values being included.

Preferably, the cutting of said annular elongated extruded piece is repeated a plurality of times to produce a plurality of annular semi-finished products.

Preferably, the cutting of said annular elongated extruded piece is carried out through a cold or hot wire, preferably made of harmonic steel with thickness from 0.5 mm to 1 mm. However, it is possible to provide further cutting systems, like for example a water cutting or a high-pressure cutting.

Preferably, the annular elongated extruded piece comes out from said extruder head with a speed lower than or equal to about 0.015 m/s, preferably lower than or equal to about 0.0015 m/s.

Preferably, the cutting of said annular elongated extruded piece takes place with a cutting speed greater than or equal to about 0.1 m/s, preferably greater than or equal to about 0.2 m/s.

The cutting of the annular elongated extruded piece thus takes place at a speed much higher than that at which the annular elongated extruded piece moves. Such a provision contributes to carry out a clean and precise cutting of the annular elongated extruded piece.

Preferably, during the continuous extrusion of said expanding elastomeric compound said extruder head is kept at a temperature greater than, or equal to, 50 °C, more preferably greater than, or equal to, about 90 °C.

Preferably, during the continuous extrusion of said expanding elastomeric compound said extruder head is kept at a temperature lower than, or equal to, about 120 °C, more preferably lower than, or equal to, about 110 °C.

In preferred embodiments, the continuous extrusion of said expanding elastomeric compound said extruder head is kept at a temperature comprised between about 50 °C and about 120 °C, preferably between about 90 °C and about 110 °C, the extreme values being included.

The temperature of the extruder head is thus controlled so as to avoid having in the extruder head a temperature that is too low, in which case the expanding elastomeric compound and the annular elongated extruded piece would not be able to slide in a sufficiently fluid manner inside the extruder head, or that is too high, in which case there would be the risk that the compound starts to expand inside the extruder head. Preferably, the control of the temperature of the extruder head is carried out through circulation in the extruder head of water or oil.

In the case in which it is necessary to heat the extruder head, the desired heating is preferably achieved through one or more thermal resistances suitable positioned in the extruder head.

Preferably, a stove in which said semi-finished product can be preheated is provided between said cutting device and said press. Preferably, a cooling device for cooling said semi-finished is provided between said cutting device and said stove.

Preferably, said extruder comprises a loading hopper for loading a plurality of ingredients suitable for making the expanding elastomeric compound.

Preferably, said extruder comprises a mixing portion for mixing said ingredients in order to obtain said expanding elastomeric compound. Preferably, said cutting device is arranged at a distance from said extruder head greater than, or equal to, about 0.5 mm.

Preferably, said cutting device is arranged at a distance from said extruder head lower than, or equal to, about 5 mm.

In preferred embodiments, said cutting device is arranged at a distance from said extruder head comprised between about 0.5 mm and about 5 mm, the extreme values being included.

Preferably, said cutting device comprises a hot wire movable along a direction substantially orthogonal to an extrusion direction.

Preferably, said extruder head comprises an outer annular body having an at least partially substantially conical or frusto-conical shape. Preferably, said outer annular body is provided, at a first free end portion thereof, with an inlet opening for said expanding elastomeric compound.

Preferably, said outer annular body is provided, at a second free end portion thereof, with an outlet opening for the annular elongated extruded piece.

Preferably, said extruder head comprises an inner body arranged inside the outer annular body.

Preferably, said inner body has a substantially conical first free end portion arranged close to said inlet opening.

Preferably, said inner body has a second free end portion arranged close to said outlet opening.

Preferably, said extruder head comprises a first ring associated with said outer annular body at said outlet opening.

Preferably, said extruder head comprises a second ring associated with said inner body at said second free end portion.

Preferably, said second ring is arranged inside said first ring.

The aforementioned rings define the shape and the transverse dimensions of the outlet portion of the extruder head and, therefore, determine the shape and transverse dimensions of the annular elongated extruded piece, of the semi-finished product obtained after the cutting of said annular elongated extruded piece and of the mousse obtained after the expansion of said semi-finished product.

Preferably, said first ring comprises a conical or frusto-conical radially inner surface.

Preferably, said second ring comprises a conical or frusto-conical radially outer surface.

The outlet portion of the extruder head thus has a conical configuration that is particularly advantageous since it produces a beneficial compacting action of the expanding elastomeric compound in the annular elongated extruded piece coming out from the extruder head. Preferably, said first and second rings comprise distal faces, from said outer annular body and inner body, respectively, which are mutually aligned.

Preferably, said first ring is interchangeable with respective rings of different shape and/or size.

Preferably, said second ring is interchangeable with respective rings of different shape and/or size.

It is thus possible to obtain mousses of different sizes. For example, a configuration with a first ring of 345 mm and a second ring of 277 mm allows a mousse to be obtained that can be used in a rear tyre of a rally/Dakar motorcycle, whereas a configuration with a first ring of 358 mm and a second ring of 308 mm allows a mousse to be obtained that can be used in a tyre for MTB bicycles.

Preferably, a cooling device for cooling said extruder head is provided.

Preferably, said cooling device comprises a first cooling circuit formed in the outer annular body for the circulation of a first cooling fluid and a second cooling circuit formed in the inner body for the circulation of a second cooling fluid.

Preferably, said outer annular body comprises a first inlet hole for said first cooling fluid.

Preferably, said outer annular body comprises a first outlet hole for said first cooling fluid.

Preferably, said outer annular body comprises a channel that connects said first inlet and outlet holes.

The aforementioned first inlet hole, first outlet hole and channel define the aforementioned first cooling circuit.

Preferably, said first inlet hole is made on a radially outer surface of said outer annular body.

Preferably, said first outlet hole is made on a radially outer surface of said outer annular body.

Preferably, said outer annular body comprises a second inlet hole for said second cooling fluid.

Preferably, said outer annular body comprises a second outlet hole for said second cooling fluid.

Preferably, said inner body comprises an inlet channel for said second cooling fluid.

Preferably, said inner body comprises an outlet channel for said second cooling fluid.

The aforementioned inlet and outlet channels define the aforementioned second cooling circuit.

Preferably, said inner body is associated with said outer annular body through at least two perforated screws housed in respective first housing holes formed in said outer annular body.

Preferably, said first housing holes are formed in a radially outer position with respect to said inlet opening.

Preferably, said at least two perforated screws are housed in respective second housing holes formed in said inner body and axially aligned with said first housing holes.

Preferably, said extruder head comprises a support member configured to support said inner body inside said outer annular body.

Preferably, said mousse comprises a radially outer diameter comprised between about 345 mm and about 358 mm and a radially inner diameter comprised between about 277 mm and about 308 mm.

### DESCRIPTION OF THE FIGURES

Further features and advantages of the present invention will become clearer from the following detailed description of a preferred embodiment thereof, made with reference to the attached drawings.

In such drawings:
- figure 1 is a radial section of a tyre inside which a mousse made in accordance with the present invention is provided;
- figure 2 is a schematic view of an apparatus for manufacturing the mousse of figure 1;
- figure 3 is a schematic view of a cross section of a part of the apparatus of figure 2.

### DETAILED DESCRIPTION OF AN EMBODIMENT OF THE INVENTION

With reference to figure 1, reference numeral 100 wholly indicates a tyre for motorcycles and reference numeral 103 indicated a mousse manufactured according to the present invention and arranged in the cavity defined between the tyre 100 and the rim 110 of the wheel of the motorcycle.

The tyre 100 is preferably intended to be mounted on a rim 110 of a motorcycle having a high weight and a medium-high piston displacement, of the so-called "Rally off-road" type.

The tyre 100 comprises a reinforcing structure comprising in turn a carcass structure 3 formed of at least two carcass plies.

In the illustrated embodiment, the carcass structure 3 is formed of four carcass plies 3a, 3b, 3c, 3d radially overlapping to one another.

Each carcass ply 3a, 3b, 3c, 3d essentially consists of a sheet of elastomeric material incorporating a plurality of reinforcing cords, not shown.

The reinforcing cords are essentially parallel to one another in each carcass ply and oriented in each ply according to directions inclined with respect to the equatorial plane X-X of the tyre 100 and opposite with respect to the cords of the radially adjacent carcass ply.

At least some of the carcass plies 3a, 3b, 3c, 3d are engaged, at the axially opposite side edges thereof, with at least one annular reinforcing structure.

In particular, in the specific example illustrated herein the axially opposite side edges of the carcass plies 3a and 3b are turned up around bead cores 4, whereas the axially opposite side edges of the carcass plies 3c and 3d stop before reaching close to such bead cores 4.

On the radially outer perimeter edge of the bead cores 4 a tapered elastomeric filling 5 is applied that occupies the space defined by the turn up of the carcass plies.

The area of the tyre 100 comprising the bead core 4 and the elastomeric filling 5 forms the so-called bead 4a, which is intended to anchor the tyre 100 on a corresponding mounting rim, not shown.

The area of the bead 4a comprises, in an axially outer position with respect to the turned up side edges of the carcass plies, a strip 13 made of anti-abrasion elastomeric material.

In a radially inner position with respect to the carcass structure 3 the tyre 100 comprises a sealing layer 2a, or so-called "liner", essentially consisting of a layer of elastomeric material impermeable to air, adapted to ensure the hermetic seal of the tyre itself once inflated.

A belt structure 6 is circumferentially applied on the carcass structure 3, in radially outer position thereof.

The belt structure 6 comprises at least one layer 7 that has a plurality of circumferential windings arranged axially adjacent, formed of a rubber-coated cord 7a or of a band comprising some rubber-coated cords 7a (preferably from two to five), wound in a spiral with a substantially zero angle (typically between 0° and 5°) with respect to the equatorial plane X-X of the tyre 100.

The cords 7a of the belt structure 6 are preferably metal cords, but they can also be textile or hybrid cords.

The tyre 100 can also comprise a layer made of elastomeric material 10 arranged between the carcass structure 2 and the belt structure 6 and preferably extending on a surface substantially corresponding to the surface of extension of the belt structure 6. Alternatively, said layer 10 extends on a surface greater than the surface of extension of the belt structure 6.

In a preferred embodiment, the layer 10 comprises short aramid fibers or aromatic polyamide fibers, dispersed in said elastomeric material.

In a radially outer position with respect to the belt structure 6 a tread band 18 is applied on which, after a molding operation carried out at the same time as the vulcanization of the tyre 100, blocks are typically formed, separated from one another through recesses, grooves and/or longitudinal and/or transverse channels, arranged to define a desired tread pattern.

The grooves and/or the transverse and/or longitudinal recesses that define the blocks of the tread band 18 preferably have (even if not necessarily all) a depth of at least 7 mm.

In the specific example illustrated herein, the tread band 18 comprises rows of transverse blocks 20 defined circumferentially by transverse channels.

Each row of blocks 20 preferably has four large blocks that transversally cross the tread band 18. In particular, each row of blocks 20 preferably has two central blocks 23 and two side blocks 24.

The central blocks 23 are separated from one another by a circumferential groove 26 substantially arranged astride of the equatorial plane X-X.

Each side block 24 is separated from an adjacent central block 23 by a circumferential channel 25.

Each side block 24 can have a circumferential groove 27 having a reduced depth adapted and adapted to divide each block into two smaller blocks.

The tyre 100 also comprises a pair of sidewalls 30 applied laterally on opposite sides to said carcass structure 3.

The tyre 100 is, purely as an example, a rear tyre, it has a section height H measured, on the equatorial plane X-X, between the top of the outer surface of the tread band 18 and the fitting diameter, defined by the reference line r, passing through the beads 4a of the tyre 100.

The tyre 100 also has a maximum width of cross section C (or maximum cord) defined by the distance between the axially outermost points of the tyre itself. In the example shown in figure 1 the width C is defined by the distance between the laterally opposite ends E of the tread band 18.

The tyre 100 preferably has a transverse curvature that is not particularly high. For example, the transverse curvature ratio f/C is lower than or equal to about 0.3 for a rear tyre and lower than or equal to about 0.4 for a front tyre.

The tyre 100 preferably has relatively high sidewalls 30. For example, the sidewalls height ratio (H-f)/H is equal to at least about 0.5.

The mousse 103 is arranged in the cavity defined between the tyre 100 and the rim 110.

The mousse 103 is advantageously made in the form of a toroid having dimensions compatible with the cavity between tyre 100 and rim 110.

In particularly preferred embodiments thereof, the mousse 103 has a radially outer diameter comprised between about 345 mm and about 358 mm and a radially inner diameter comprised between about 277 mm and about 308 mm.

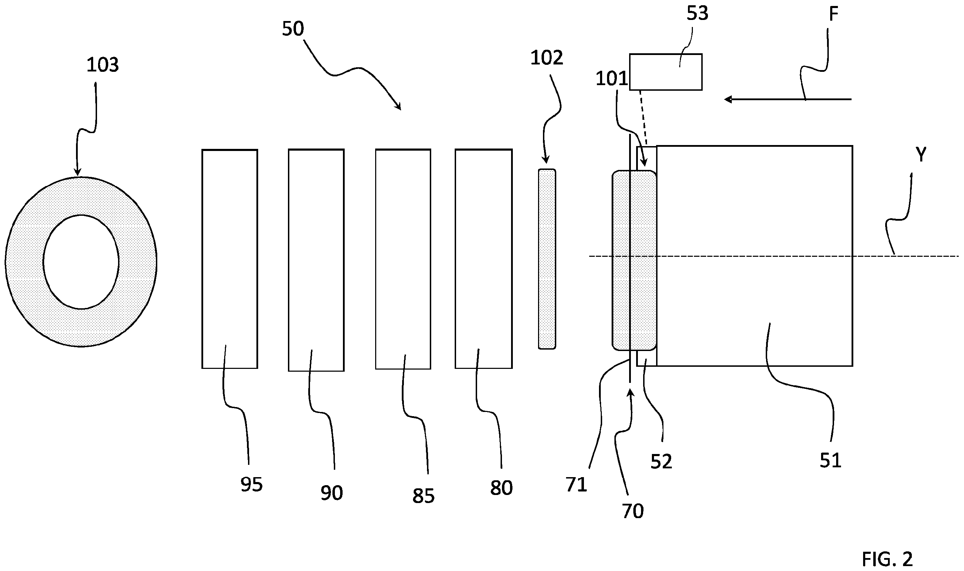

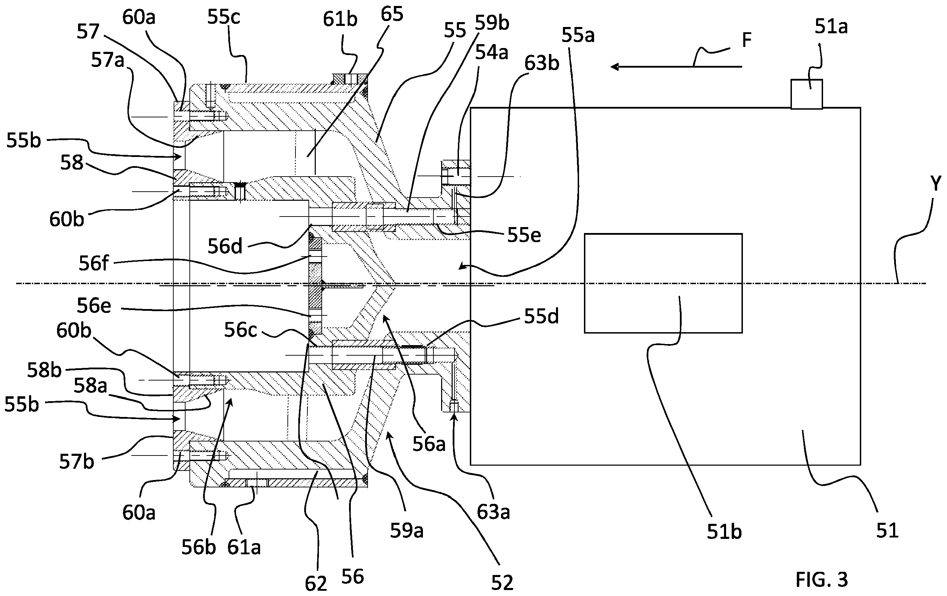

With reference to figures 2 and 3, an apparatus 50 for manufacturing the mousse 103, in accordance with the present invention, is described. The apparatus 50 comprises an extruder 51 provided with a loading hopper 51a for loading a plurality of ingredients selected as a function of the expanding elastomeric compound that it is wished to use.

The extruder 51 also comprises a mixing portion 51b in which the aforementioned ingredients are advantageously mixed to make the desired expanding elastomeric compound (figure 3).

The extruder 51 has a longitudinal axis Y.

Inside the extruder 51 the elastomeric compound advances along an extrusion direction F.

With reference to figure 2, the extruder 51 comprises an extruder head 52 configured to make an annular elongated extruded piece 101.

The temperature of the extruder head 52 is controlled through a cooling device 53, described below.

As shown in figure 2, a cutting device 70 is provided downstream of the extruder head 52, with reference to the extrusion direction F. In the embodiment illustrated herein, the cutting device is a hot wire 71 movable along a direction orthogonal to the extrusion direction F.

The cutting device 70 carries out a cutting of the annular elongated extruded piece 101 coming out from the extruder head 52 to form an annular semi-finished product 102 having a substantially square cross section.

The cutting device 70 is arranged at a distance from the extruder head 52 comprised between about 0.5 mm and about 5 mm, the extreme values being included.

A cooling device 80 for cooling the semi-finished product 102 is provided downstream of the cutting device 70, with reference to the extrusion direction F.

For example, the cooling device 80 can be a tank containing water at room temperature.

A stove 85 in which a preheating of the semi-finished product 102 is carried out is provided downstream of the cooling device 80, with reference to the extrusion direction F.

A press 90 in which the semi-finished product 102 is vulcanized, so as to provide it with a substantially circular cross section, is provided downstream of the stove 85, with reference to the extrusion direction F. Downstream of the press 90, with reference to the extrusion direction F, an expansion furnace 95 is provided in which the vulcanized semi-finished product 102 is heated so as to allow the expansion of said expanding elastomeric compound until a mousse 103 having the desired toroidal configuration is obtained.

With reference to figure 3, the extruder head 52 is associated with the extruder 51 through a plurality of screws 54a, only one of which is visible in figure 3. For the sake of simplicity of illustration the head of the screw 54a is not shown.

The extruder head 52 comprises an outer annular body 55 having a substantially frusto-conical shape.

The outer annular body 55 has, at a first free end portion thereof, a circular inlet opening 55a for the expanding elastomeric compound coming from the mixing portion 51b of the extruder 51 and, at a second free end portion thereof, a circular outlet opening 55b for the annular elongated extruded piece 101.

Inside the outer annular body 55 an inner body 56 is arranged having a substantially conical first free end portion 56a arranged close to the inlet opening 55a of the outer annular body 55 and a second free end portion 56b arranged close to the outlet opening 55b of the outer annular body 55.

The inner body 56 is connected to the outer annular body 55 through perforated screws 59a, 59b housed in respective housing holes 55d, 55e formed in the outer annular body 55 and in respective housing holes 56c, 56d formed in the inner body 56 and axially aligned with the housing holes 55d, 55e. For the sake of simplicity of illustration the head of the perforated screws 59a, 59b is not shown.

The housing holes 55d, 55e are formed in a radially outer position with respect to the inlet opening 55a.

The inner body 56 is preferably coupled with the outer annular body 55 through a support member 65 for example of the tie rod or cross type. A first ring 57 is associated with the outer annular body 55 at the outlet opening 55b thereof through a plurality of screws 60a. For the sake of simplicity of illustration the head of the screws 60a is not shown.

The first ring 57 preferably has a conical or tapered radially inner surface 57a so as to narrow the outlet opening 55b of the outer annular body 55 progressively moving along the extrusion direction F.

A second ring 58 is arranged inside said first ring 57.

The second ring 58 is associated with the inner body 56 at the second free end portion 56b thereof through a plurality of screws 60b. For the sake of simplicity of illustration the head of the screws 60b is not shown. The second ring 58 has a radially outer surface 58a that is also conical or tapered so as to narrow the outlet opening 55b of the outer annular body 55 progressively moving along the extrusion direction F.

In this way, the elongated annular element 101 comes out from the extruder head through a conical annular channel defined by the two rings 57 and 58.

The first ring 57 has a face 57b which is distal from the outer annular body 55 and aligned with a face 58b of the second ring 58 which is distal from the inner body 56.

The first ring 57 and the second ring 58 are interchangeable with respective rings of different shape and/or size so as to be able to manufacture mousses 103 of different sizes.

In the specific example illustrated herein, the extruder head 53 is thermo-regulated through circulation of at least one cooling fluid, preferably water or oil, in suitable cooling channels formed in the outer annular body 55 and in the inner body 56. Such cooling channels are part of the aforementioned cooling device 53.

In particular, as shown in figure 3, a first cooling circuit, in which a first cooling fluid circulates, is provided in the outer annular body 55 and a second cooling circuit, in which a second cooling fluid circulates, is provided in the inner body 56.

More in particular, the outer annular body 55 comprises an inlet hole 61a for the first cooling fluid, an outlet hole 61b for the first cooling fluid and a channel 62 that connects the inlet and outlet holes 61a, 61b. In the specific example illustrated herein, the inlet and outlet holes 61a, 61b are both made on a radially outer surface 55c of the outer annular body 55.

The outer annular body 55 also comprises an inlet hole 63a for the second cooling fluid connected to the housing hole 55c and, through the perforated screw 59a housed in the housing hole 55c, to a respective inlet channel 56e of the second cooling fluid formed in the inner body 56.

The outer annular body 55 also comprises an outlet hole 63b for the second cooling fluid connected to the housing hole 55d and, through the perforated screw 59b housed in the housing hole 55d, to a respective outlet channel 56f of the second cooling fluid formed in the inner body 56.

The inlet and outlet channels 56e, 56f connect the housing hole 56c with the housing hole 56d.

Therefore, the first cooling fluid enters into the outer annular body 55 through the inlet hole 61a, crosses the channel 62 formed in the outer annular body 55 and comes out from the outer annular body 55 through the outlet hole 61b, whereas the second cooling fluid enters into the inner body 56 passing through the inlet hole 63a formed in the outer annular body 55 and the perforated screw 59a housed in the housing hole 55d of the outer annular body 55 and in the housing hole 56c of the inner body 56, crosses the inlet channel 56e and the outlet channel 56f formed in the inner body 56 and comes out from the inner body 56 passing through the perforated screw 59b housed in the housing hole 56d of the inner body 56 and in the housing hole 55e of the outer annular body 55 to then come out through the outlet hole 63b formed in the outer annular body 55.

Electrical resistances that are not shown can be arranged in various points of the extruder head 52 in the case in which it is necessary to heat the extruder head 52 during the extrusion process.

The mousse 103 can be manufactured through the apparatus 50 described above by carrying out the process described below with reference to figures 2 and 3.

The ingredients suitable for making the desired expanding elastomeric compound are introduced into the extruder 51, through the loading hopper 51a.

Such ingredients are advantageously mixed in the mixing portion 51b of the extruder 51 to form the expanding elastomeric compound.

Such a compound is fed continuously to the extruder head 52 along the extrusion direction F.

The annular elongated extruded piece 101 comes out from the extruder head 52.

During the formation of the annular elongated extruded piece 101 the temperature of the extruder head 52 is controlled through feeding of the aforementioned first and second cooling fluids in the aforementioned first and second cooling circuits. The control of the temperature can involve the activation of the aforementioned electrical resistances.

Preferably, the temperature of the extruder head 52 is kept between about 50 °C and about 120 °C, more preferably between about 90 °C and about 110 °C, the extreme values being included.

The annular elongated extruded piece 101 comes out from the extruder head preferably with a speed lower than or equal to about 0.015 m/s, more preferably lower than or equal to about 0.0015 m/s, for example equal to about 0.0011 m/s.

While the annular elongated extruded piece 101 comes out from the extruder head it is repeatedly cut by the hot wire 71 to form a plurality of annular semi-finished products 102 with substantially square cross section.

Preferably, the cutting of the annular elongated extruded piece 101 takes place with a cutting speed greater than or equal to about 0.01 m/s, more preferably greater than or equal to about 0.2 m/s, for example equal to about 0.4 m/s.

The semi-finished products 102 thus obtained are cooled through the cooling device 80, for example dipping them in a tank containing cold water. Such cooling takes place in a time period preferably comprised between about 5 minutes and about 90 minutes and proceeds until the semi-finished products 102 have reached a temperature not greater than about 30 °C, for example equal to about 24 °C.

Each semi-finished product 102 is subsequently preheated in the stove 85 to a temperature which preferably is variable between about 50 °C and about 150 °C for a time period which preferably is variable between about 15 minutes and about 120 minutes.

The preheated semi-finished product 102 is then inserted in the press 90. The latter is preferably closed in many closing steps (for example from 2 to 5 steps) spaced by stopping periods of the closing action (for example from 3 to 60 seconds for each period) with a closing force which preferably is variable between about 200 KN and about 10000 KN. The semi-finished product 102 is thus vulcanized inside the press 90 for a time period which preferably is variable between about 10 minutes and about 120 minutes, heating it to a temperature which is variable between about 100 °C and about 180 °C, so as to provide it with a substantially circular cross section.

The vulcanized semi-finished product 102 is subsequently kept at room temperature for a predetermined time period.

The semi-finished product 102 is finally introduced into the expansion furnace 95, where it is heated for a time period which preferably I is variable between about 5 minutes and about 100 minutes to a temperature which preferably is variable between about 100 °C and about 220 °C, so as to allow the expansion of the expanding elastomeric compound and obtain a mousse 103 having the desired toroidal configuration.

The present description, although referring to a rear tyre, is meant to be applicable also to a front tyre, with the exclusion of the belt structure that in the front tyre typically is not provided.

## Claims

1. Process for manufacturing a mousse (103) for vehicle tyres (100), comprising:
- continuously extruding an expanding elastomeric compound in an extruder (51) having an extruder head (52) configured to generate an annular elongated extruded piece (101);
- cutting said annular elongated extruded piece (101) so as to form an annular semi-finished product (102);
- vulcanizing said semi-finished product (102) inside a press (90) so as to provide said semi-finished product (102) with a substantially circular cross section;
- heating the vulcanized semi-finished product (102) inside an expansion furnace (95) so as to allow the expansion of said expanding elastomeric compound and provide said semi-finished product (102) with a desired toroidal configuration.

2. Process according to claim 1, comprising, before vulcanizing the semi-finished product (102), cooling said semi-finished product (102) for a predetermined time period.

3. Process according to claim 2, comprising, after having cooled the semi-finished product (102) and before vulcanizing it, preheating said semi-finished product (102) in a stove (85).

4. Process according to any one of the previous claims, wherein said expanding elastomeric compound is made inside said extruder (51) upon introduction and mixing a plurality of ingredients in said extruder (51).

5. Process according to any one of the previous claims, comprising repeating the cutting of said annular elongated extruded piece (101) a plurality of times to produce a plurality of annular semi-finished products (102).

6. Process according to any one of the previous claims, wherein the cutting of said annular elongated extruded piece (101) is carried out at a distance from said extruder head (52) comprised between about 0.5 mm and about 5 mm, the extreme values being included.

7. Process according to any one of the previous claims, wherein the cutting of said annular elongated extruded piece (101) is carried out through a hot wire (71).

8. Process according to any one of the previous claims, wherein the annular elongated extruded piece (101) comes out from said extruder head (52) with a speed lower than or equal to about 0.015 m/s and the cutting of said annular elongated extruded piece (101) takes place with a cutting speed greater than or equal to about 0.1 m/s.

9. Process according to any one of the previous claims, wherein during the continuous extrusion of said expanding elastomeric compound said extruder head (52) is kept at a temperature comprised between about 50 °C and about 120 °C.

10. Apparatus (50) for manufacturing a mousse (103) for vehicle tyres (100), comprising:
- an extruder (51) configured to continuously extrude an expanding elastomeric compound, said extruder (51) comprising an extruder head (52) configured to generate an annular elongated extruded piece (101);
- a cutting device (70) configured to cut said annular elongated extruded piece (101) so as to form an annular semi-finished product (102);
- a press (90) in which said semi-finished product (102) has to be vulcanized to provide said semi-finished product (102) with a substantially circular cross section;
- an expansion furnace (95) in which said vulcanized semi-finished product (102) has to be heated so as to allow the expansion of said expanding elastomeric compound and provide said vulcanized semi-finished product (102) with a desired toroidal configuration.

11. Apparatus (50) according to claim 10, comprising, between said cutting device (70) and said press (90), a stove (85) in which said semi-finished product (102) has to be preheated.

12. Apparatus (50) according to claim 11, comprising, between said cutting device (70) and said stove (85), a cooling device (80) for cooling said semi-worked product (102).

13. Apparatus (50) according to any one of claims 10 to 12, wherein said extruder (51) comprises a loading hopper (51a) for loading a plurality of ingredients and a mixing portion (51b) for mixing said ingredients to obtain said expanding elastomeric compound.

14. Apparatus (50) according to any one of claims 10 to 13, wherein said cutting device (70) is arranged at a distance from said extruder head (52) comprised between about 0.5 mm and about 5 mm, the extreme values being included.

15. Apparatus (50) according to any one of claims 10 to 14, wherein said cutting device (70) comprises a hot wire (71) movable along a direction substantially orthogonal to an extrusion direction (F).

16. Apparatus (50) according to any one of claims 10 to 15, wherein said extruder head (52) comprises:
- an outer annular body (55) having an at least partially substantially conical or frusto-conical shape and provided, at a first free end portion thereof, with an inlet opening (55a) for said expanding elastomeric compound and, at a second free end portion thereof, with an outlet opening (55b) for the annular elongated extruded piece (101);
- an inner body (56) arranged inside the outer annular body (55) and having a substantially conical first free end portion (56a) arranged close to said inlet opening (55a) and a second free end portion (56b) arranged close to said outlet opening (55b).

17. Apparatus (50) according to claim 16, wherein said extruder head (52) comprises:
- a first ring (57) associated with said outer annular body (55) at said outlet opening (55b);
- a second ring (58) associated with said inner body (56) at said second free end portion (56b) and arranged inside said first ring (57).

18. Apparatus (50) according to claim 17, wherein said first ring (57) comprises a conical or frusto-conical radially inner surface (57a) and said second ring (58) comprises a conical or frusto-conical radially outer surface (58a).

19. Apparatus (50) according to claim 17 or 18, wherein said first ring (57) and second ring (58) are interchangeable with respective rings of different shape and/or size.

20. Apparatus (50) according to any one of claims 16 to 19, wherein said outer annular body (55) comprises:
- a first inlet hole (61a) for a first cooling fluid;
- a first outlet hole (61b) for said first cooling fluid;
- a channel (62) that connects said first inlet hole (61a) and first outlet hole (61b).

21. Apparatus (50) according to any one of claims 16 to 20, wherein said outer annular body (55) comprises:
- a second inlet hole (63a) for a second cooling fluid;
- a second outlet hole (63b) for said second cooling fluid.

22. Apparatus (50) according to claim 21, wherein said inner body (56) comprises:
- an inlet channel (56e) for said second cooling fluid;
- an outlet channel (56f) for said second cooling fluid.

23. Apparatus (50) according to claim 22, wherein said inner body (56) is associated with said outer annular body (55) through at least two perforated screws (59a, 59b) housed in respective first housing holes (55d, 55e) formed in said outer annular body (55) in a radially outer position with respect to said inlet opening (55a) and in respective second housing holes (56c, 56d) formed in said inner body (56) and axially aligned with said first housing holes (55d, 55e).

## Patentansprüche

1. Verfahren zur Herstellung eines Schaums (103) für Fahrzeugreifen (100), umfassend:
- kontinuierliches Extrudieren einer sich ausdehnenden Elastomerverbindung in einem Extruder (51) mit einem Extruderkopf (52), der dazu ausgestaltet ist, ein ringförmiges, längliches extrudiertes Stück (101) zu erzeugen;
- Ablängen des ringförmigen, länglichen extrudierten Stücks (101), um ein ringförmiges halbfertiges Produkt (102) zu bilden;
- Vulkanisieren des halbfertigen Produkts (102) in einer Presse (90), um dem halbfertigen Produkt (102) einen im Wesentlichen kreisförmigen Querschnitt zu verleihen;
- Aufheizen des vulkanisierten halbfertigen Produkts (102) innerhalb eines Expansionsofens (95), um die Expansion der sich ausdehnenden Elastomerverbindung zu erlauben und dem halbfertigen Produkt (102) eine gewünschte ringförmige Konfiguration zu verleihen.

2. Verfahren nach Anspruch 1, umfassend das Kühlen des halbfertigen Produkts (102) für eine vorbestimmte Zeitperiode vor dem Vulkanisieren des halbfertigen Produkts (102).

3. Verfahren nach Anspruch 2, umfassend das Vorheizen des halbfertigen Produkts (102) in einem Ofen (85) nach dem Kühlen des halbfertigen Produkts (102) und vor dessen Vulkanisieren.

4. Verfahren nach einem der vorhergehenden Ansprüche, wobei die sich ausdehnende Elastomerverbindung nach Einbringen und Mischen einer Vielzahl von Bestandteilen in dem Extruder (51) innerhalb des Extruders (51) hergestellt wird.

5. Verfahren nach einem der vorhergehenden Ansprüche, umfassend das Wiederholen des Ablängens des ringförmigen, länglichen extrudierten Stücks (101) eine Vielzahl von Malen, um eine Vielzahl von ringförmigen halbfertigen Produkten (102) zu produzieren.

6. Verfahren nach einem der vorhergehenden Ansprüche, wobei das Ablängen des ringförmigen, länglichen extrudierten Stücks (101) in einem Abstand von dem Extruderkopf (52) von zwischen etwa 0,5 mm und etwa 5 mm ausgeführt wird, wobei die Extremwerte eingeschlossen sind.

7. Verfahren nach einem der vorhergehenden Ansprüche, wobei das Ablängen des ringförmigen, länglichen extrudierten Stücks (101) durch einen Heißdraht (71) ausgeführt wird.

8. Verfahren nach einem der vorhergehenden Ansprüche, wobei das ringförmige, längliche extrudierte Stück (101) aus dem Extruderkopf (52) mit einer Geschwindigkeit von weniger als oder gleich etwa 0,015 m/s herauskommt, und das Ablängen des ringförmigen, länglichen extrudierten Stücks (101) mit einer Schneidgeschwindigkeit von mehr als oder gleich etwa 0,1 m/s erfolgt.

9. Verfahren nach einem der vorhergehenden Ansprüche, wobei während der durchgehenden Extrusion der sich ausdehnenden Elastomerverbindung der Extruderkopf (52) auf einer Temperatur zwischen etwa 50 °C und etwa 120 °C gehalten wird.

10. Vorrichtung (50) zur Herstellung eines Schaums (103) für Fahrzeugreifen (100), umfassend:
- einen Extruder (51), der dazu ausgestaltet ist, eine sich ausdehnende Elastomerverbindung kontinuierlich zu extrudieren, wobei der Extruder (51) einen Extruderkopf (52) umfasst, der dazu ausgestaltet ist, ein ringförmiges, längliches extrudiertes Stück (101) zu erzeugen;
- eine Ablängvorrichtung (70), die dazu ausgestaltet ist, das ringförmige, längliche extrudierte Stück (101) abzuschneiden, um ein ringförmiges halbfertiges Produkt (102) zu bilden;
- eine Presse (90), in welcher das halbfertige Produkt (102) vulkanisiert werden muss, um dem halbfertigen Produkt (102) einen im Wesentlichen kreisförmigen Querschnitt zu verleihen;
- einen Expansionsofen (95), in dem das vulkanisierte halbfertige Produkt (102) aufgeheizt werden muss, um die Expansion der sich ausdehnenden Elastomerverbindung zu erlauben und dem halbfertigen Produkt (102) eine gewünschte ringförmige Konfiguration zu verleihen.

11. Vorrichtung (50) nach Anspruch 10, umfassend einen Ofen (85) zwischen der Ablängvorrichtung (70) und der Presse (90) in welchem das halbfertige Produkt (102) vorgeheizt werden muss.

12. Vorrichtung (50) nach Anspruch 11, umfassend eine Kühlvorrichtung (80) zwischen der Ablängvorrichtung (70) und dem Ofen (85), zum Kühlen des halbbearbeiteten Produkts (102).

13. Vorrichtung (50) nach einem der Ansprüche 10 bis 12, wobei der Extruder (51) einen Ladetrichter (51a) zum Einladen einer Vielzahl von Bestandteilen und einen Mischabschnittt (51b) zum Mischen der Bestandteile umfasst, um die sich ausdehnende Elastomerverbindung zu erhalten.

14. Vorrichtung (50) nach einem der Ansprüche 10 bis 13, wobei die Ablängvorrichtung (70) in einem Abstand von dem Extruderkopf (52) von zwischen etwa 0,5 mm und etwa 5 mm angeordnet ist, wobei die Extremwerte eingeschlossen sind.

15. Vorrichtung (50) nach einem der Ansprüche 10 bis 14, wobei die Ablängvorrichtung (70) einen Heißdraht (71) umfasst, der entlang einer Richtung im Wesentlichen orthogonal auf eine Extrusionsrichtung (F) beweglich ist.

16. Vorrichtung (50) nach einem der Ansprüche 10 bis 15, wobei der Extruderkopf (52) umfasst:
- einen äußeren ringförmigen Körper (55), der eine zumindest teilweise im Wesentlichen konische oder kegelstumpfförmige Gestalt aufweist, und an einem ersten freien Endabschnitt davon mit einer Einlassöffnung (55a) für die sich ausdehnende Elastomerverbindung und an einem zweiten freien Endabschnitt davon mit einer Auslassöffnung (55b) für das ringförmige, längliche extrudierte Stück (101) versehen ist;
- einen inneren Körper (56), der innerhalb des äußeren ringförmigen Körpers (55) angeordnet ist und einen im Wesentlichen konischen ersten freien Endabschnitt (56a), der nahe der Einlassöffnung (55a) angeordnet ist, und einen zweiten freien Endabschnitt (56b), der nahe der Auslassöffnung (55b) angeordnet ist, aufweist.

17. Vorrichtung (50) nach Anspruch 16, wobei der Extruderkopf (52) umfasst:
- einen ersten Ring (57), der dem äußeren ringförmigen Körper (55) an der Auslassöffnung (55b) zugeordnet ist;
- einen zweiten Ring (58), der dem inneren Körper (56) an dem zweiten freien Endabschnitt (56b) zugeordnet und innerhalb des ersten Rings (57) angeordnet ist.

18. Vorrichtung (50) nach Anspruch 17, wobei der erste Ring (57) eine konische oder kegelstumpfförmige radial innere Oberfläche (57a) umfasst und der zweite Ring (58) eine konische oder kegelstumpfförmige radial äußere Oberfläche (58a) umfasst.

19. Vorrichtung (50) nach Anspruch 17 oder 18, wobei der erste Ring (57) und der zweite Ring (58) jeweils gegen Ringe mit unterschiedlicher Gestalt und/oder Größe austauschbar sind.

20. Vorrichtung (50) nach einem der Ansprüche 16 bis 19, wobei der äußere ringförmige Körper (55) umfasst:
- ein erstes Einlassloch (61a) für ein erstes Kühlfluid;
- ein erstes Auslassloch (61b) für das erste Kühlfluid;
- einen Kanal (62), der das erste Einlassloch (61a) und das erste Auslassloch (61b) verbindet.

21. Vorrichtung (50) nach einem der Ansprüche 16 bis 20, wobei der äußere ringförmige Körper (55) umfasst:
- ein zweites Einlassloch (63a) für ein zweites Kühlfluid;
- ein zweites Auslassloch (63b) für das zweite Kühlfluid.

22. Vorrichtung (50) nach Anspruch 21, wobei der innere Körper (56) umfasst:
- einen Einlasskanal (56e) für das zweite Kühlfluid;
- einen Auslasskanal (56f) für das zweite Kühlfluid.

23. Vorrichtung (50) nach Anspruch 22, wobei der innere Körper (56) dem äußeren ringförmigen Körper (55) durch zumindest zwei Durchgangsschrauben (59a, 59b) zugeordnet ist, die in jeweiligen ersten, in dem äußeren ringförmigen Körper (55) in einer radial äußeren Position in Bezug auf die Einlassöffnung (55a) gebildeten Einhausungslöchern (55d, 55e) und in jeweiligen zweiten, in dem inneren Körper (56) gebildeten und axial mit den ersten Einhausungslöchern (55d, 55e) ausgerichteten Einhausungslöchern (56c, 56d) eingehaust sind.

## Revendications

1. Procédé de fabrication d'une mousse (103) pour pneus de véhicule (100), comprenant le fait de :
- extruder en continu un composé élastomère expansible dans une extrudeuse (51) ayant une tête d'extrudeuse (52) configurée pour générer une pièce extrudée allongée annulaire (101) ;
- couper ladite pièce extrudée allongée annulaire (101) de manière à former un produit semi-fini annulaire (102) ;
- vulcaniser ledit produit semi-fini (102) à l'intérieur d'une presse (90) de manière à fournir une section transversale sensiblement circulaire audit produit semi-fini (102) ;
- chauffer le produit semi-fini vulcanisé (102) à l'intérieur d'un four d'expansion (95) de manière à permettre l'expansion dudit composé élastomère expansible et fournir une configuration toroïdale souhaitée audit produit semi-fini (102).

2. Procédé selon la revendication 1, comprenant le fait de refroidir, avant la vulcanisation du produit semi-fini (102), ledit produit semi-fini (102) pendant une période prédéterminée.

3. Procédé selon la revendication 2, comprenant le fait de préchauffer, après avoir refroidi le produit semi-fini (102) et avant de le vulcaniser, ledit produit semi-fini (102) dans une étuve (85).

4. Procédé selon l'une quelconque des revendications précédentes, dans lequel ledit composé élastomère expansible est fabriqué à l'intérieur de ladite extrudeuse (51) lors de l'introduction et du mélange d'une pluralité d'ingrédients dans ladite extrudeuse (51).

5. Procédé selon l'une quelconque des revendications précédentes, comprenant la répétition de la coupe de ladite pièce extrudée allongée annulaire (101) plusieurs fois pour produire une pluralité de produits semi-finis annulaires (102) .

6. Procédé selon l'une quelconque des revendications précédentes, dans lequel la coupe de ladite pièce extrudée allongée annulaire (101) est effectuée à une distance de ladite tête d'extrudeuse (52) comprise entre environ 0,5 mm et environ 5 mm, les valeurs extrêmes étant incluses.

7. Procédé selon l'une quelconque des revendications précédentes, dans lequel la coupe de ladite pièce extrudée allongée annulaire (101) est effectuée par un fil chaud (71) .

8. Procédé selon l'une quelconque des revendications précédentes, dans lequel la pièce extrudée allongée annulaire (101) sort de ladite tête d'extrudeuse (52) avec une vitesse inférieure ou égale à environ 0,015 m/s et la coupe de ladite pièce extrudée allongée annulaire (101) se produit avec une vitesse de coupe supérieure ou égale à environ 0,1 m/s.

9. Procédé selon l'une quelconque des revendications précédentes, dans lequel pendant l'extrusion continue dudit composé élastomère expansible, ladite tête d'extrudeuse (52) est maintenue à une température comprise entre environ 50°C et environ 120°C.

10. Appareil (50) de fabrication d'une mousse (103) pour pneus de véhicule (100), comprenant :
- une extrudeuse (51) configurée pour extruder en continu un composé élastomère expansible, ladite extrudeuse (51) comprenant une tête d'extrudeuse (52) configurée pour générer une pièce extrudée allongée annulaire (101) ;
- un dispositif de coupe (70) configuré pour couper ladite pièce extrudée allongée annulaire (101) de manière à former un produit semi-fini annulaire (102) ;
- une presse (90) dans laquelle ledit produit semi-fini (102) doit être vulcanisé pour fournir une section transversale sensiblement circulaire audit produit semi-fini (102) ;
- un four d'expansion (95) dans lequel ledit produit semi-fini vulcanisé (102) doit être chauffé de manière à permettre l'expansion dudit composé élastomère expansible et fournir une configuration toroïdale souhaitée audit produit semi-fini vulcanisé (102).

11. Appareil (50) selon la revendication 10, comprenant, entre ledit dispositif de coupe (70) et ladite presse (90), une étuve (85) dans laquelle ledit produit semi-fini (102) doit être préchauffé.

12. Appareil (50) selon la revendication 11, comprenant, entre ledit dispositif de coupe (70) et ladite étuve (85), un dispositif de refroidissement (80) pour refroidir ledit produit semi-ouvré (102).

13. Appareil (50) selon l'une quelconque des revendications 10 à 12, dans lequel ladite extrudeuse (51) comprend une trémie de chargement (51a) pour charger une pluralité d'ingrédients et une partie de mélange (51b) pour mélanger lesdits ingrédients pour obtenir ledit composé élastomère expansible.

14. Appareil (50) selon l'une quelconque des revendications 10 à 13, dans lequel ledit dispositif de coupe (70) est agencé à une distance de ladite tête d'extrudeuse (52) comprise entre environ 0,5 mm et environ 5 mm, les valeurs extrêmes étant incluses.

15. Appareil (50) selon l'une quelconque des revendications 10 à 14, dans lequel ledit dispositif de coupe (70) comprend un fil chaud (71) mobile le long d'une direction sensiblement orthogonale à une direction d'extrusion (F).

16. Appareil (50) selon l'une quelconque des revendications 10 à 15, dans lequel ladite tête d'extrudeuse (52) comprend :
- un corps annulaire externe (55) ayant une forme au moins en partie sensiblement conique ou tronconique et pourvu, au niveau d'une première partie d'extrémité libre de celui-ci, d'une ouverture d'entrée (55a) pour ledit composé élastomère expansible et, au niveau d'une deuxième partie d'extrémité libre de celui-ci, d'une ouverture de sortie (55b) pour la pièce extrudée allongée annulaire (101) ;
- un corps interne (56) agencé à l'intérieur du corps annulaire externe (55) et ayant une première partie d'extrémité libre sensiblement conique (56a) agencée à proximité de ladite ouverture d'entrée (55a) et une deuxième partie d'extrémité libre (56b) agencée à proximité de ladite ouverture de sortie (55b).

17. Appareil (50) selon la revendication 16, dans lequel ladite tête d'extrudeuse (52) comprend :
- une première bague (57) associée audit corps annulaire externe (55) au niveau de ladite ouverture de sortie (55b) ;
- une deuxième bague (58) associée audit corps interne (56) au niveau de ladite deuxième partie d'extrémité libre (56b) et agencée à l'intérieur de ladite première bague (57) .

18. Appareil (50) selon la revendication 17, dans lequel ladite première bague (57) comprend une surface radialement interne conique ou tronconique (57a) et ladite deuxième bague (58) comprend une surface radialement externe conique ou tronconique (58a).

19. Appareil (50) selon la revendication 17 ou 18, dans lequel ladite première bague (57) et la deuxième bague (58) sont interchangeables avec des bagues respectives de différentes formes et/ou de tailles.

20. Appareil (50) selon l'une quelconque des revendications 16 à 19, dans lequel ledit corps annulaire externe (55) comprend :
- un premier trou d'entrée (61a) pour un premier fluide de refroidissement ;
- un premier trou de sortie (61b) pour ledit premier fluide de refroidissement ;
- un canal (62) qui relie ledit premier trou d'entrée (61a) et ledit premier trou de sortie (61b).

21. Appareil (50) selon l'une quelconque des revendications 16 à 20, dans lequel ledit corps annulaire externe (55) comprend :
- un deuxième trou d'entrée (63a) pour un deuxième fluide de refroidissement ;
- un deuxième trou de sortie (63b) pour ledit deuxième fluide de refroidissement.

22. Appareil (50) selon la revendication 21, dans lequel ledit corps interne (56) comprend :
- un canal d'entrée (56e) pour ledit deuxième fluide de refroidissement ;
- un canal de sortie (56f))) pour ledit deuxième fluide de refroidissement.

23. Appareil (50) selon la revendication 22, dans lequel ledit corps interne (56) est associé audit corps annulaire externe (55) à travers au moins deux vis perforées (59a, 59b) reçues dans des premiers trous de logement respectifs (55d, 55e) formés dans ledit corps annulaire externe (55) dans une position radialement externe par rapport à ladite ouverture d'entrée (55a) et dans des deuxièmes trous de logement respectifs (56c, 56d) formés dans ledit corps interne (56) et alignés axialement avec lesdits premiers trous de logement (55d, 55e).
